(19)

Europäisches
Patentamt
European
Patent Office
Office européen
des brevets

(11) **EP 4 570 410 A1**

(12) **EUROPEAN PATENT APPLICATION**
published in accordance with Art. 153(4) EPC

(43) Date of publication:
**18.06.2025 Bulletin 2025/25**

(21) Application number: **23885380.8**

(22) Date of filing: **11.09.2023**

(51) International Patent Classification (IPC):
**B23K 9/073** $^{(2006.01)}$   **B23K 9/02** $^{(2006.01)}$
**B23K 9/09** $^{(2006.01)}$   **B23K 9/16** $^{(2006.01)}$

(52) Cooperative Patent Classification (CPC):
**B23K 9/02; B23K 9/073; B23K 9/09; B23K 9/16**

(86) International application number:
**PCT/JP2023/033085**

(87) International publication number:
**WO 2024/095614 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.10.2022 JP 2022174339**

(71) Applicant: **JFE Steel Corporation
Tokyo 100-0011 (JP)**

(72) Inventors:
• **KONISHI Kyohei
Tokyo 100-0011 (JP)**
• **SAWANISHI Chikaumi
Tokyo 100-0011 (JP)**
• **TANIGUCHI Koichi
Tokyo 100-0011 (JP)**

(74) Representative: **Haseltine Lake Kempner LLP
Bürkleinstrasse 10
80538 München (DE)**

(54) **LAP FILLET ARC WELDING METHOD, AND METHOD FOR PRODUCING WELDING JOINT**

(57) An object is to provide a lap fillet arc welding method and a method for manufacturing a welded joint that can prevent the intrusion of oxygen into a weld metal without using a special device and can suppress the formation of slag, and that can stably produce welded joints with a good bead shape.

A lap fillet arc welding method performs joining of two steel sheets lapped one on top of the other in such a manner that the welding target position is displaced from an overlap corner formed by the two steel sheets and present at an end of the upper sheet of the two steel sheets, by 0.2 mm or more and 1.8 mm or less in a direction perpendicular to the weld seam of the lower sheet, a gas containing 98 vol% or more Ar is used as a shielding gas, and the weld metal height H (mm) and the weld metal width W (mm) satisfy expression (1) below:

$$0.2 \leq H/W \leq 1.2 \quad \cdots (1).$$

FIG. 1-2

EP 4 570 410 A1

**Description**

Technical Field

The present invention relates to a lap fillet arc welding method for producing an arc welded joint with a good weld toe shape while suppressing slag formation, and to a method for manufacturing a welded joint.

Background Art

In recent years, there has been a growing need for automobiles to use stronger and more rigid members in car body and structures in order to enhance the safety and reliability of the car body and structures and at the same time to use lightweight members in order to improve fuel efficiency. As a result, efforts are being made to reduce the thickness of steel sheets for such members by the use of high-strength steel sheets. Among the various members used in automobiles, in particular, suspension members (such as, for example, lower arms) are made of thick steel sheets compared to bodies from the points of view of the strength and rigidity of the members. Thus, further reduction in the weight of car body and structures will be achieved if the thickness of steel sheets used in suspension members can be further reduced by increasing the strength of the steel sheets. This will realize improved fuel efficiency while ensuring the strength and rigidity of members.

In general, members that will be used in corrosive environments are subjected to antirust treatments, such as chemical conversion treatment and electrodeposition coating, after being welded in order to ensure corrosion resistance. Unfortunately, it is often the case that the welds and the vicinities thereof are rusted or corroded over time. The corrosion that occurs in the electrodeposition-coated member tends to start at the weld. Over time, the corrosion spreads widely on the weld and its surroundings while causing blisters on the coating film, and also progresses in the thickness direction. The progress of corrosion reduces the thickness at the weld and the vicinity thereof, and consequently lowers the strength of the weld and ultimately weakens the strength of the member. That is, the occurrence and progress of corrosion in a member where a load acts on a weld (such as, for example, automobile suspension members) can lead to the destruction of the member.

Electrodeposition coating is preceded by a pretreatment for improving the adhesion between a base steel sheet including a weld metal, and an electrodeposition coating film. Specifically, electrodeposition coating is performed after a chemical conversion treatment (such as, for example, zinc phosphate treatment) is applied to the base steel sheet and the weld metal. The zinc phosphate treatment, which is a common example of the chemical conversion treatments, is a technique in which zinc phosphate crystals are grown on the surface of a base steel sheet and a weld metal to increase the adhesion of a coating film formed by electrodeposition coating. Unfortunately, even members that have been chemically converted by the conventional technique prior to electrodeposition coating frequently develop blisters on the coating film with time over a wide area on the weld and its surroundings. That is, it is difficult for the conventional chemical conversion pretreatment followed by electrodeposition coating to completely suppress the occurrence of corrosion from the weld.

When members made of steel sheets with coating layer are arc welded, the welds are subjected to high temperature by the arc plasma (hereinafter, "arc") that is the heat source, and the coating layers are vaporized to expose uncoated portions locally. As a result, a significant enhancement in corrosion resistance that will justify the increase in cost due to the use of the steel sheets with coating layer cannot be expected.

As described above, various manufacturing techniques have been developed so as to improve the corrosion resistance of members, but each has its own advantages and disadvantages. To enhance corrosion resistance while avoiding the increase in manufacturing costs, techniques have been studied that can prevent more effectively the occurrence and progress of corrosion from a weld.

It is conventionally known that corrosion of a weld starts from:

(a) slag attached to the weld (mainly the surface of the weld bead),
(b) welding fumes attached to the weld, and
(c) oxides formed on the surface of the steel sheets exposed to high temperatures by welding. In the presence of the deposits (a) and/or (b) or of the oxides (c) on the weld, chemical conversion treatment locally fails to coat the member with a chemical conversion layer of zinc phosphate crystals, and the deposits and/or the products remain on exposed regions.

Such regions exposed from the chemical conversion layer do not allow an electrodeposition coating film to be formed sufficiently, and the adhesion of the coating film is insufficient to cause a significant decrease in corrosion resistance. As a result, corrosion occurs and progresses and the sheet loses thickness. The techniques described below address the prevention of the occurrence of deposits (a) and (b) and of oxides (c) mentioned above.

For example, Patent Literature 1 discloses a technique in which an arc weld and the vicinity thereof, before being electrodeposition coated, are sprayed with or immersed in a non-oxidizing acidic solution with a pH of 2 or less at a liquid temperature of 30 to 90°C. This technique removes slag (a), welding fumes (b), and oxides (c) by dissolving the weld bead and the steel sheet with the non-oxidizing solution.

However, the technique disclosed in Patent Literature 1 requires rinsing of the acidic solution before electrodeposition coating, and this fact makes the member manufacturing process complicated. In addition, a member fabricated into a desired shape is a result of overlapping and joining of steel sheets having various shapes and can trap a residue of the acidic solution in gaps between the overlapped steel sheets, thus undergoing severe corrosion. Furthermore, the technique involves a large amount of the acidic solution and thus the manufacturing equipment is exposed to a corrosive environment and is easily corroded or broken down. In addition, the scattering of fumes needs to be prevented in order to ensure the safety of workers.

Patent Literature 2 discloses a technique that increases the post-coating corrosion resistance of a weld and the vicinity thereof by reducing the total amount of Si in a welding wire used in arc welding and a base material, and also by increasing the total amount of Mn in the welding wire and the base material.

However, reducing the Si content in order to suppress slag formation inevitably lowers the strength of the steel sheet. That is, the technique disclosed in Patent Literature 2 needs to use thick steel sheets in order to ensure the strength of members and will not succeed in achieving weight reduction of car body and structures.

Patent Literature 3 discloses a technique that allows a chemical conversion layer to be formed sufficiently even on a weld bead that bears slag, welding fumes, and oxides, by controlling the composition of a treatment liquid used in the chemical conversion treatment. In this technique, the formation of a chemical conversion layer is facilitated by surface-treating the steel with a surface-conditioning liquid containing colloidal zinc phosphate. Furthermore, the steel is chemically converted with a zinc phosphate treatment liquid having a F content of 100 mass ppm or more. This treatment dissolves and removes slag, welding fumes, and oxides and thereby increases the adhesion of a coating film that will be formed by electrodeposition coating.

However, the zinc phosphate treatment liquid used in the technique disclosed in Patent Literature 3 contains fluorine that is designated as a toxic substance, and the fluorine content must be lowered to a level meeting environmental standards when the liquid waste is discharged outside the factory. Thus, a large-scale liquid waste disposal facility is necessary in addition to the member manufacturing facility.

Citation List

Patent Literature

    PTL 1: Japanese Unexamined Patent Application Publication No. 9-20994
    PTL 2: Japanese Unexamined Patent Application Publication No. 8-33997
    PTL 3: Japanese Patent No. 5549615

Summary of Invention

Technical Problem

The present invention has been made in view of the problems discussed above. It is therefore an object of the present invention to provide a lap fillet arc welding method and a method for manufacturing a welded joint that can prevent the intrusion of oxygen into a weld metal without using a special device and can suppress the formation of slag, and that can stably produce welded joints with a good weld bead shape.

Solution to Problem

The present inventors have found that the most effective way to enhance the corrosion resistance of welds and to stably obtain welded joints with a good bead shape is to control the welding target position to fall within a predetermined region aside the overlap corner, which is formed by two steel sheets and is present at an end of the upper sheet of the two steel sheets, in the direction perpendicular to the weld seam of the lower sheet. Here, it is important to suppress the oxidation of Si, Mn, Ti, etc. contained in the steel sheets and the welding wire in order to reduce the amount of slag that affects the corrosion resistance of the weld. The oxidation of these elements is suppressed and the amount of slag formation can be reduced by the use of a shielding gas containing a reduced amount of an oxidizing gas. In gas-shielded arc welding in a shielding gas containing a high proportion of Ar gas, however, the cathode spot crawls around on the steel sheet surface after the oxide film on the steel sheet surface has been removed by the cleaning action, thus making the arc unstable. Furthermore, the dissolution of O (oxygen), which lowers the surface tension, into the molten metal is extremely small, and consequently the weld bead tends to be convex in shape and the joint strength is lowered. The present inventors have worked on these new problems and have conceived the idea that regular droplet transfer would be effective in ensuring a stable supply of metal deposits to the weld. The present inventors have then decided to utilize short-circuit transfer that is less susceptible to arc fluctuations. Regarding the smoothing of a weld bead shape, the welding target position is displaced from the overlap corner, which is formed by two steel sheets and is present at an end of the upper sheet of the two steel sheets, in the direction perpendicular to the weld seam of the lower sheet. The present inventors believe that this offset allows for an increased area of contact between the weld surface and the arc even in the absence of elements that lower surface tension, and consequently the weld metal from a certain amount of deposits can be increased in width and reduced in height.

The present invention is completed based on the above findings. A gist of the present invention is as follows.

[1] A lap fillet arc welding method of joining a corner formed by at least two steel sheets, wherein the joining is performed using short-circuit transfer, a welding target position is displaced from an overlap corner formed by the two steel sheets and present at an end of the upper sheet of the two steel sheets, by 0.2 mm or more and 1.8 mm or less in a direction perpendicular to a weld seam of the lower sheet, a gas containing 98 vol% or more Ar is used as a shielding gas, and a weld metal height H (mm) and a weld metal width W (mm) of a weld satisfy expression (1) below:

$$0.2 \leq H/W \leq 1.2 \quad \cdots (1).$$

[2] The lap fillet arc welding method according to [1], wherein pulse welding is used in which a pulse peak current (Ip) and a pulse base current (Ib) are repeated periodically, and the pulse peak current (Ip) and the pulse frequency in the pulse welding are 300 A or more and 600 A or less, and 30 Hz or more and 200 Hz or less, respectively.

[3] A method for manufacturing a welded joint using the lap fillet arc welding method described in [1] or [2].

Advantageous Effects of Invention

According to the present invention, welded joints with a good bead shape can be obtained stably. Moreover, the intrusion of oxygen into the weld metal and the formation of slag can be suppressed without making changes to special specifications for the conventional welding device used in MAG welding with an oxidizing gas or MIG welding with an inert gas-based gas.

Brief Description of Drawings

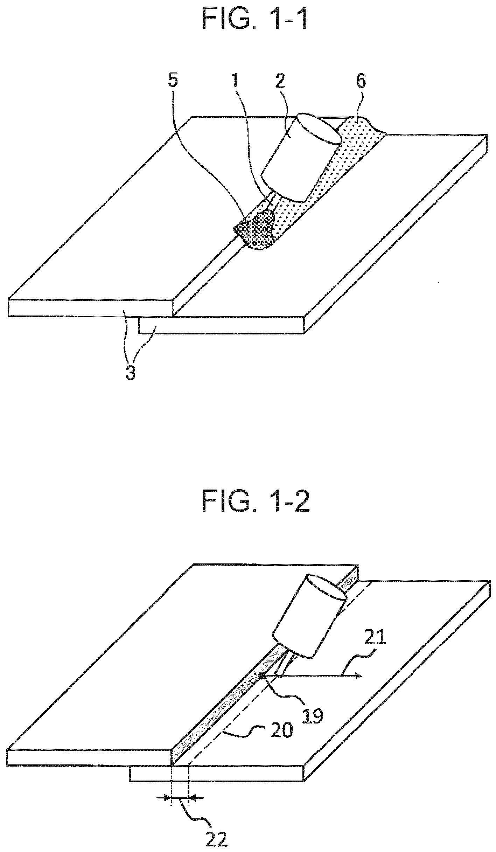

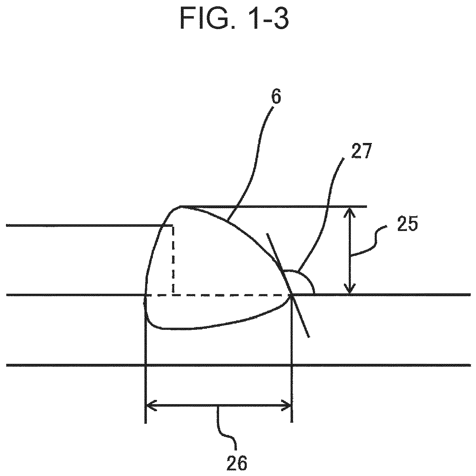

[Fig. 1-1] Fig. 1-1 is a schematic view illustrating an exemplary welded joint produced by lap fillet arc welding.
[Fig. 1-2] Fig. 1-2 is a view illustrating a welding target position.
[Fig. 1-3] Fig. 1-3 is a view illustrating a cross section of a weld bead.
[Fig. 2] Fig. 2(a) and Fig. 2(b) are schematic views illustrating droplet transfer in conventional arc welding.
[Fig. 3] Fig. 3(a) and Fig. 3(b) are schematic views illustrating short-circuit transfer according to the present invention.
[Fig. 4] Fig. 4 is a schematic diagram illustrating a pulse current waveform in arc welding according to the present invention.
[Fig. 5] Fig. 5 is a schematic view illustrating the bead area and the slag-covered area of a weld bead.

Description of Embodiments

The present invention will be described in detail hereinbelow with reference to the drawings. Fig. 1-1 is a schematic view illustrating an exemplary welded joint produced by lap fillet arc welding according to an embodiment of the present invention. The illustration is only a typical example, and the shape of the welded joint and the welding position are not limited thereto.

In the present invention, for example, as illustrated in Fig. 1-1, a welding wire 1 is continuously fed from a welding torch 2 to a base material 3 (specifically, a weld seam defined by the corner of a step formed by lapping of, for example, two sheets of the base material 3) through a central portion of the welding torch 2. The welding wire 1 is used as the anode, and the base material 3 is used as the cathode. A welding voltage is applied from a welding power supply (not shown). Part of an Ar shielding gas (not shown) supplied from the inside of the welding torch 2 is ionized into plasma, thereby forming an arc 5 between the welding wire 1 and the base material 3. Part of the Ar shielding gas that is not ionized and flows from the welding torch 2 to the base material 3 plays a role of shielding the arc 5 and a molten pool (not shown in Fig. 1-1) formed by melting of the base material 3 from the outside air. The heat input from the arc 5 melts the tip of the welding wire 1 to form a droplet, and the droplet is transported to the molten pool by, for example, electromagnetic force or gravity. This phenomenon occurs continuously while the welding torch 2 or the base material 3 is moved. As a result, the molten pool behind the process along the weld seam solidifies to form a weld bead 6. In this manner, at least two steel sheets are joined together. The solid from the molten pool is the weld metal.

Fig. 1-2 is a view illustrating the welding target position in Fig. 1-1. The welding target position is the intersection of the welding wire 1 with the base material 3. Welding is performed by fixing the welding target position on a target line 20 remote by a predetermined distance from an overlap corner 19 that is formed by the two steel sheets and is present at an end of the upper sheet of the two steel sheets.

Fig. 1-3 is a view illustrating a cross section of the weld bead. Welding is performed while ensuring a predetermined weld metal height (H) 25, a predetermined weld metal width (W) 26, and a predetermined flank angle ($\theta$) 27 in the weld bead 6 (the weld). These will be described in detail later.

Extreme welding instability is encountered when carbon steel of interest in the present invention is welded by conventional MIG welding. MAG welding or MIG welding is a reversed polarity welding in which an electrode (a wire) is the anode. On the surface of a steel sheet as a base material, cathode spots are formed from regions, such as oxides, that have a low work function and easily emit electrons. For example, an aluminum alloy having a strong oxide film on the surface of the base material can be favorably welded because cathode spots are formed stably from the oxide film on the weld seam. However, steel rarely has an oxide film and therefore cathode spots are not fixed in MIG welding that does not generate oxides derived from $O_2$ or $CO_2$. Thus, the cathode spots move around on the surface of the base material vigorously in search of places where the work function is low. The welding is destabilized and the welded joint that is obtained has a meandering or wavy weld bead 6.

To address this phenomenon, the present inventors have observed the arc behavior in welding experiments and have concluded that the meandering or wavy profile of the weld bead encountered in MIG welding of carbon steel is mainly attributed to unstable droplet transfer.

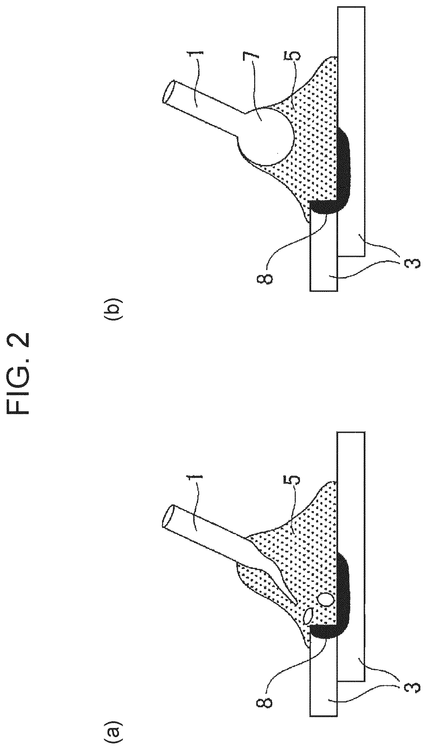

Fig. 2(a) and Fig. 2(b) are schematic views illustrating droplet transfer in conventional MIG welding. In conventional MIG welding, droplets transfer in mixed manners in which, as illustrated in Fig. 2(a), the welding wire 1 is melted and droplets are continuously transported from the long and thin liquid column to the molten pool 8. Such unstable droplet transfer will be effectively avoided by causing droplets 7 to be detached regularly from the tip of the welding wire 1. However, the electromagnetic pinching force acting on the welding wire 1 in Ar shielding gas is small, which makes the detachment of the droplets 7 difficult.

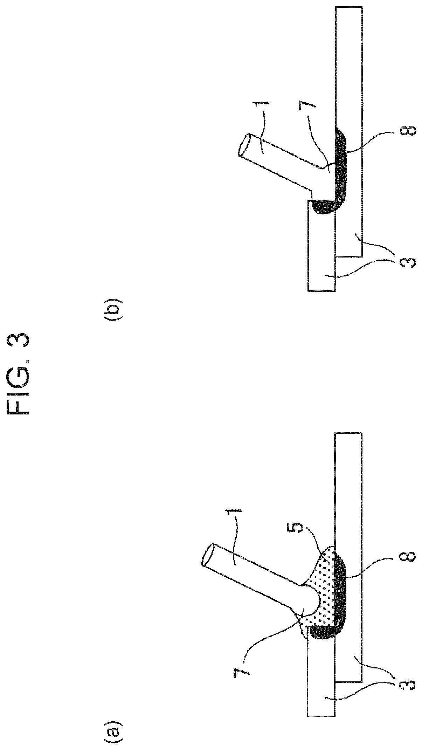

The present invention is based on the finding that droplet transfer is effectively stabilized by completing the joining by so-called periodic short-circuit transfer in which the non-short-circuited state of Fig. 3(a) and the short-circuited state of Fig. 3(b) are regularly repeated between the tip of the welding wire 1 and the base material 3, and a droplet 7 is allowed to be transferred to the base material 3 during the short-circuited state.

Gas containing 98 vol% or more Ar

The amount of slag attached to the weld needs to be reduced in order to enhance the corrosion resistance of the weld. For this purpose, it is important to suppress the oxidation of Si, Mn, Ti, etc. contained in the steel sheets and the welding wire 1. In view of this, the shielding gas that is used needs to be a gas containing 98 vol% or more Ar. Argon is preferably contained 99 vol% or more. The upper limit is not particularly limited, and argon may represent 100 vol%.

$$0.2 \leq H/W \leq 1.2 \quad \cdots (1)$$

As illustrated in Fig. 1-3, numeral 25 indicates the weld metal height (H), numeral 26 the weld metal width (W), and numeral 27 the flank angle ($\theta$). By specifying the relationship between the weld metal height (H) 25 and the weld metal width (W) 26 to the range defined by the expression (1) above, a weld bead 6 having a smooth toe shape can be obtained. If H/W is less than 0.2, the heat input is dispersed over a wide range, sometimes with the result that the end of the upper sheet is not melted sufficiently to cause an undercut, or the weld penetration into the lower sheet is excessively small. Thus, H/W is limited to 0.2 or more. H/W is preferably 0.25 or more, more preferably 0.3 or more, and still more preferably 0.35 or more. If H/W is more than 1.2, the weld bead 6 is convex in shape and the flank angle 27 is excessively small. Thus, H/W is limited to 1.2 or less. H/W is preferably 1.1 or less, more preferably 1.0 or less, and still more preferably 0.9 or less. The units for H and W are both mm.

The molten metal height (H) and the weld metal width (W) are measured in the following manner. As will be described later, the molten metal height (H) 25 and the weld metal width (W) 26 were measured with respect to through-thickness cross sections perpendicular to the weld seam that had been sampled from randomly selected five locations of the weld bead 6 excluding bead-start and bead-finish end portions 10 (each 15 mm long) of the weld bead 6 illustrated in Fig. 6. The randomly selected five locations were 5 mm or more away from one another. Here, the weld bead 6 was cut at random locations in the thickness direction perpendicular to the weld seam, and the molten metal height 25 and the weld metal width 26 in each cross section were measured. The results were averaged to determine the "molten metal height (H)" and the "weld metal width (W)". The molten metal height (H) preferably satisfies H/T of 0.8 or more where T is the thickness (mm) of the upper sheet. However, this ratio is not particularly limited. H/T is more preferably 0.9 or more. The upper limit of H/T is preferably 1.8 or less. H/T is more preferably 1.6 or less. The weld metal width (W) preferably satisfies W/T of 1.5 or more where T is the thickness (mm) of the upper sheet. W/T is more preferably 1.6 or more. The upper limit of W/T is preferably 3.0 or less. W/T is more preferably 2.8 or less.

The welding target position is displaced from the overlap corner formed by two steel sheets and present at an end of the upper sheet of the two steel sheets, by 0.2 mm or more and 1.8 mm or less in the direction perpendicular to the weld seam of the lower sheet.

As illustrated in Fig. 1-2, the welding target position in the present invention is a point where the extension line from the welding wire 1 intersects with the base material 3. By displacing the target position from the overlap corner 19 in the direction perpendicular to the weld seam of the lower sheet (hereinafter, the displacement is also written as offset, and the direction and the amount thereof are written as offset direction 21 and offset value 22, respectively), the weld metal width 26 can be increased and the weld metal height 25 can be reduced, and $0.2 \le H/W \le 1.2$ can be satisfied even in gas-shielded arc welding in which the proportion of Ar is increased and the surface tension of the molten metal is high. If the offset value 22 is less than 0.2 mm, the welding region is limited to a narrow range and the weld bead tends to be convex in shape and sometimes has an excessively high H/W. Thus, the offset value 22 is limited to 0.2 mm or more, that is, the welding target position is displaced by 0.2 mm or more from the overlap corner in the direction perpendicular to the weld seam of the lower sheet. The offset value 22 is preferably 0.3 mm or more, more preferably 0.4 mm or more, and still more preferably 0.5 mm or more. If, on the other hand, the offset value 22 is more than 1.8 mm, the current path formation at the overlap corner is destabilized and the arc plasma fluctuates greatly, making stable welding difficult. Furthermore, there is a concern that the amount of slag may be increased due to air entrainment. Thus, the offset value 22 is limited to 1.8 mm or less, that is, the welding target position is displaced by 1.8 mm or less from the overlap corner in the direction perpendicular to the weld seam of the lower sheet. The offset value 22 is preferably 1.7 mm or less, more preferably 1.6 mm or less, and still more preferably 1.5 mm or less.

The pulse peak current (Ip) is 300 A or more and 600 A or less (preferred condition).

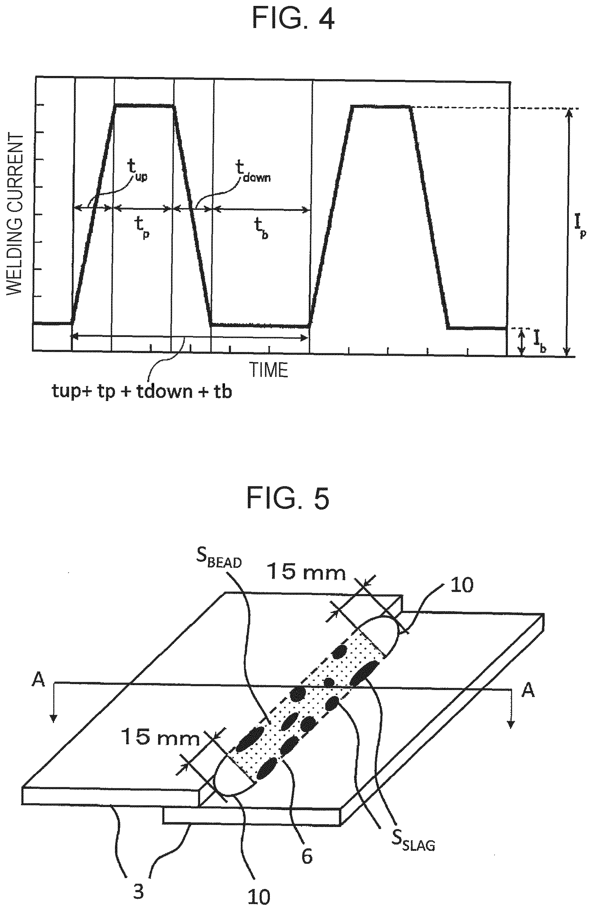

Fig. 4 illustrates a schematic diagram of a pulse current waveform in the arc welding of the present invention. Pulse welding is a method of welding in which a pulse peak current (Ip) and a pulse base current (Ib) are periodically repeated. If the pulse peak current (Ip) is excessively low, an action that pushes down the droplet 7 formed at the tip of the welding wire 1 to the molten pool 8 cannot be obtained and short-circuiting may become unstable. Furthermore, sufficient heat input cannot be ensured and the bead shape may be deteriorated. Thus, the pulse peak current (Ip) is preferably 300 A or more, more preferably 350 A or more, still more preferably 380 A or more, and most preferably 400 A or more. On the other hand, an excessively high pulse peak current causes burn-through and increases the amount of spatters. Thus, the pulse peak current (Ip) is preferably 600 A or less, more preferably 590 A or less, still more preferably 580 A or less, and most preferably 570 A or less. To ensure that a short-circuit occurs during the application of the pulse peak current, the pulse peak current time (tp) per cycle is preferably 0.5 ms or more. The pulse peak current time (tp) per cycle is more preferably 0.7 ms or more, and still more preferably 0.8 ms or more. If the pulse peak current time (tp) per cycle is too long, the arc 5 and the molten pool 8 are much disturbed during short-circuiting and the weld bead shape may be defective. Thus, the pulse peak current time (tp) per cycle is desirably 3.5 ms or less. The pulse peak current time (tp) per cycle is more preferably 3.3 ms or less, and still more preferably 3.2 ms or less.

If the pulse base current (Ib) is too low, the arc discharge during the pulse base period is destabilized to cause deterioration of the bead shape, and also the weld penetration may be incomplete. Thus, the pulse base current (Ib) is preferably 30 A or more. The pulse base current (Ib) is more preferably 35 A or more, still more preferably 40 A or more, and most preferably 45 A or more. If, on the other hand, the pulse base current is excessively high, burn-through occurs and a sufficient difference between the pulse peak current (Ip) and the pulse base current (Ib) cannot be ensured, with the result that a short-circuiting action that pushes down the droplet 7 formed at the tip of the welding wire 1 to the molten pool 8 cannot be obtained sufficiently and welding may become unstable. Thus, the pulse base current (Ib) is preferably 120 A or less. The pulse base current (Ib) is more preferably 110 A or less. The pulse base current (Ib) is still more preferably 100 A or less, and most preferably 90 A or less. If the pulse base current time (tb) per cycle is too short, the droplet 7 cannot grow to an ideal size and periodic short-circuiting may not be realized. Thus, the pulse base current time (tb) per cycle is preferably 1.0 ms or more. The pulse base current time (tb) per cycle is more preferably 1.5 ms or more, still more preferably 2.0 ms or more, and most preferably 2.5 ms or more. If the pulse base current time (tb) per cycle is too long, short-circuiting may not be controlled as intended in the pulse peak period, or the arc 5 and the molten pool 8 may be significantly disturbed during short-circuiting. Thus, the pulse base current time (tb) per cycle is preferably 10.0 ms or less. The pulse base current time (tb) per cycle is more preferably 9.0 ms or less, still more preferably 8.5 ms or less, and most preferably 8.0 ms or less. Shortness of the rise-up time (tup) and the fall-down time (tdown) induces fluctuations of the arc 5, and extensiveness thereof leads to deterioration of bead shape. Thus, these durations are preferably 0.1 to 3.0 ms, respectively. Specifically, tup is preferably 0.1 ms or more, more preferably 0.3 ms or more, still more preferably 0.4 ms or more, and most preferably 0.5 ms or more, and tdown is preferably 3.0 ms or less, more preferably 2.8 ms or less, still more preferably 2.6 ms or less, and most preferably 2.5 ms or less.

The pulse frequency is 30 Hz or more and 200 Hz or less (preferred condition).

Controlling the pulse frequency to the above range stabilizes the transfer of the droplets 7 and equalizes the amount of deposits, thereby making it possible to obtain an appropriate flank angle 27 stably.

If the pulse frequency is less than 30 Hz, the short-circuit transfer period is extended to increase the size of the droplet 7 that moves to the molten pool 8, or droplet-transferring modes other than short-circuit transfer (such as, for example, streaming transfer) occur irregularly. Thus, the pulse frequency is preferably 30 Hz or more. The pulse frequency is more preferably 40 Hz or more, and still more preferably 50 Hz or more. If, on the other hand, the pulse frequency is more than 200 Hz, pulsing produces small droplets 7 but excessively increases the number of reignition of the arc 5 after short-circuiting, thus destabilizing the arc 5. Thus, the pulse frequency is preferably 200 Hz or less. The pulse frequency is more preferably 180 Hz or less, and still more preferably 160 Hz or less.

A high welding speed makes it difficult to maintain a constant amount of deposits and to control the weld bead shape in a continuous stable manner, and may induce welding defects, such as undercuts. The above phenomenon is particularly noticeable under welding conditions where the welding speed is 200 cm/min or more, and thus the welding speed needs to be limited to the range described below. For the reasons above, the welding speed is preferably 200 cm/min or less, more preferably 160 cm/min or less, and still more preferably 120 cm/min or less. If, on the other hand, the welding speed is low, the heat input and the amount of deposits are excessively increased, and burn-through may occur. Thus, the welding speed is preferably 20 cm/min or more, more preferably 30 cm/min or more, and still more preferably 40 cm/min or more.

The average frequency of short-circuit transfers (the short-circuit frequency) F (Hz) that affects the volume of the droplet 7 at the tip of the welding wire 1 is preferably 20 Hz or more but is not particularly limited thereto. The average frequency of short-circuit transfers (the short-circuit frequency) F (Hz) is more preferably 30 Hz or more, and still more preferably 40 Hz or more. The upper limit of the average frequency of short-circuit transfers (the short-circuit frequency) F (Hz) is preferably 200 Hz or less, more preferably 180 Hz or less, and still more preferably 150 Hz or less. Specifically, the short-circuit frequency indicates the number of occurrences per unit time of a phenomenon (a short-circuit phenomenon) in which the droplet 7 at the tip of the wire comes into contact with the molten pool 8 and the arc 5 is extinguished. For example, the average frequency of short-circuit transfers (the short-circuit frequency) F (Hz) can be measured by monitoring the arc voltage during welding with an oscilloscope to count the number of times the arc voltage becomes zero, and dividing the count by the monitoring time to calculate the number of counts per second. If the monitoring time is too short, the difference in count will be large. Thus, the monitoring time is preferably 0.5 s or more, more preferably 0.8 s or more, and still more preferably 1.0 s or more. The upper limit is not particularly limited but is preferably 3.0 s or less because the count processing time is extended with increasing volume of measurement data and thus workability is lowered. For example, one of the reasons for the above is that when the short-circuit frequency is measured in-process and the welding conditions are feedback controlled, an excessively long monitoring time makes it difficult to perform instantaneous feedback control depending on the welding situation.

When short-circuiting occurs one time per pulse period, the average frequency of short-circuit transfers (the short-circuit frequency) F (Hz) will be equal to the pulse frequency described hereinabove. However, the short-circuit period does not necessarily need to be synchronized with the pulse period, and the average frequency of short-circuit transfers (the short-circuit frequency) F (Hz) may differ from the pulse frequency.

For example, preferred welding conditions are such that the welding current is 150 A to 300 A, the arc voltage is 20 V to 35 V, the distance between the base material and the tip (the contact tip) is 5 mm to 30 mm, and the Ar shielding gas flow rate is 10 L/min to 25 L/min. Specifically, the welding current is preferably 150 A or more, more preferably 170 A or more, and still more preferably 180 A or more. The welding current is preferably 300 A or less, more preferably 280 A or less, and still more preferably 270 A or less. The arc voltage is preferably 20 V or more, more preferably 21 V or more, and still more preferably 22 V or more. The arc voltage is preferably 35 V or less, more preferably 32 V or less, and still more preferably 30 V or less. The distance between the base material 3 and the contact tip is preferably 5 mm or more, more preferably 8 mm or more, and still more preferably 10 mm or more. The distance between the base material 3 and the contact tip is preferably 30 mm or less, more preferably 25 mm or less, and still more preferably 20 mm or less. The Ar shielding gas flow rate is preferably 10 L/min or more, more preferably 12 L/min or more, and still more preferably 15 L/min or more. The Ar shielding gas flow rate is preferably 25 L/min or less, more preferably 24 L/min or less, and still more preferably 22 L/min or less. The welding current and the arc voltage are the averages in each welding pass. More specifically, the welding current is the average of the pulse peak current and the pulse base current. Control of this makes it possible to grasp the total heat input during welding. The contact tip is attached inside the welding torch. The contact tip serves to supply power to the welding wire 1 and guide the wire feed.

The welding wire used in the present invention is not particularly limited. For example, solid wires, such as YGW12 and YGW16 described in JIS Z 3312, may be used.

The base materials 3 of interest in the present invention are steel sheets and coated steel sheets. The chemical composition of the steel sheets is not limited. For example, the steel sheets preferably contain C: 0.02 mass% to 0.3 mass%, Si: 0.01 mass% or more, Mn: 0.5% mass% or more, P: 0.05 mass% or less, and S: 0.05 mass% or less, and may further contain alloying elements, such as Cu, Ni, Cr, and Ti. In the above steel sheets, the Si content is preferably 3.0 mass% or less, and the Mn content is preferably 5.0 mass% or less. The lower limit of P is not particularly limited, but is preferably 0.0005 mass% or more. The lower limit of S is not particularly limited, but is preferably 0.0005 mass% or more. The coating composition in the coated steel sheets is not particularly limited. For example, the coating may be Zn.

The lap fillet arc welding method limited as described above allows for the manufacturing of a welded joint with a good bead shape while suppressing the formation of slag in the weld, making it possible to obtain such a welded joint. In addition to this, the present invention is also advantageously characterized by its high robustness. High robustness means that the inventive technique is less susceptible to disturbances, such as environment and sheet shape, and has a wide range of appropriate welding conditions.

EXAMPLES

Hereinbelow, Examples of the present invention will be described. Two steel sheets (both 2.6 mm thick) having a chemical composition described in Table 1 were lapped and were fillet welded by an exemplary method illustrated in Fig. 1-1. In addition to the components described in Table 1, the steel sheets contained Fe and alloying elements, such as Ni, Cr, Ti, and Mo. The welding was performed under the welding conditions described in Table 2. Furthermore, YGW16 specified in JIS Z 3312 was used as the welding wire.

The welded steel sheets obtained as described above were tested by the following methods to evaluate the slab-covered area ratio ($S_{RATIO}$), the flank angle ($\theta$), and the presence or absence of undercut.

(Slag-covered area ratio)

Fig. 5 is a schematic view illustrating the bead area and the slag-covered area of a weld bead. The surface of the weld bead 6 excluding the bead-start and bead-finish end portions 10 (each 15 mm long) is photographed from directly above, and the projected areas from above of the weld bead 6 and the slag are measured to calculate the bead surface area $S_{BEAD}$ and the slag-covered surface area $S_{SLAG}$ illustrated in Fig. 5. When the length of the weld bead 6 is less than 130 mm, the surface over the entire length excluding the bead-start and bead-finish end portions 10 is photographed. When the length of the weld bead 6 is 130 mm or more, the surface of a randomly selected region (100 mm in length) excluding the bead-start and bead-finish end portions 10 is photographed. The value of the slag surface area $S_{SLAG}$ was divided by the value of the bead surface area $S_{BEAD}$ to give the slag-covered area ratio $S_{RATIO}$. $S_{RATIO}$ of 30% or less was acceptable.

(Flank angle)

The flank angle ($\theta$) 27 was measured with respect to the region of the weld bead 6 excluding the bead-start and bead-finish end portions 10 (each 15 mm long). As illustrated in Fig. 1-3, random five through-thickness cross sections of the weld bead 6 that were perpendicular (parallel to the straight line AA in Fig. 5) to the weld seam were observed. The randomly selected five locations were 5 mm or more away from one another. Here, the weld bead was cut at random locations in the through-thickness direction perpendicular to the weld seam, and the flank angle 27 in each cross section was measured. The results were averaged to determine the "flank angle $\theta$ (°)". $\theta$ of 95° or more was acceptable.

(Evaluation of the presence or absence of undercut)

The presence or absence of undercut was determined based on the definition described in JIS Z 3001-4. The region of the weld bead 6 excluding the bead-start and bead-finish end portions 10 (each 15 mm long) was visually observed for undercuts (weld defects) at the end of the weld bead 6.

Furthermore, the steel sheets were rated as A (superior) when "$S_{RATIO}$ was 30% or less, $\theta$ was 110° or more, and there was no undercut", as B (excellent) when "$S_{RATIO}$ was 30% or less, $\theta$ was 95° or more and less than 110°, and there was no undercut", and as F (fail) when the steel sheets had at least one of "$S_{RATIO}$ of more than 30%, $\theta$ of less than 95°, and an undercut".

From Table 2, the welding conditions Nos. 1 to 9 representing Inventive Examples satisfied 30% or less $S_{RATIO}$, 95° or more $\theta$, and the absence of undercut, and afforded welded joints with a good shape while suppressing slag.

Of Inventive Examples, the welding conditions Nos. 1 to 3, 5, and 6 achieved 110° or more $\theta$ and afforded more stable welded joint shapes. In contrast, the welding conditions Nos. 10 to 13 representing Comparative Examples did not satisfy any of 30% or less $S_{RATIO}$, 95° or more $\theta$, and the absence of undercut, and failed to afford satisfactory weld beads and good welded joint shapes.

[Table 1]

| Chemical composition of steel sheets (mass%) | | | | |
|---|---|---|---|---|
| C | Si | Mn | P | S |
| 0.060 | 0.71 | 1.80 | 0.006 | 0.001 |

[Table 2]

| Welding conditions Nos. | Parameters | | | | | | | | | | | | Evaluation results | | | Rating | Remarks |
|---|---|---|---|---|---|---|---|---|---|---|---|---|---|---|---|---|---|
| | Shielding gas | Welding current (A) | Arc voltage (V) | Target position (mm) | Pulse frequency (Hz) | Pulse peak current (A) | Pulse base current (A) | Welding speed (cm/min) | Short-circuit frequency (Hz) | Weld metal height H (mm) | Weld metal width W (mm) | H/W | $S_{RATIO}$ (%) | θ (°) | Undercut | | |
| 1 | 100%Ar | 215 | 24.1 | 1.0 | 45 | 500 | 100 | 70 | 107 | 3.2 | 5.5 | 0.58 | 2 | 122 | Absent | A | Inv. Ex. |
| 2 | 100%Ar | 211 | 20.8 | 1.5 | 121 | 450 | 50 | 70 | 95 | 2.9 | 5.2 | 0.56 | 3 | 129 | Absent | A | Inv. Ex. |
| 3 | 98%Ar+2%CO2 | 194 | 21.0 | 0.5 | 140 | 450 | 50 | 70 | 38 | 2.8 | 7.2 | 0.39 | 22 | 134 | Absent | A | Inv. Ex. |
| 4 | 100%Ar | 185 | 20.0 | 0.2 | - | - | - | 50 | 31 | 3.5 | 3.9 | 0.90 | 7 | 96 | Absent | B | Inv. Ex. |
| 5 | 100%Ar | 230 | 22.5 | 1.0 | 91 | 600 | 50 | 70 | 153 | 3.4 | 6.0 | 0.57 | 3 | 124 | Absent | A | Inv. Ex. |
| 6 | 100%Ar | 218 | 21.1 | 0.8 | 186 | 300 | 50 | 70 | 104 | 3.0 | 4.7 | 0.64 | 2 | 115 | Absent | A | Inv. Ex. |
| 7 | 100%Ar | 242 | 21.6 | 0.5 | 100 | 650 | 50 | 70 | 110 | 4.5 | 5.5 | 0.82 | 5 | 103 | Absent | B | Inv. Ex. |
| 8 | 100%Ar | 184 | 19.0 | 1.0 | 143 | 250 | 50 | 90 | 88 | 3.1 | 4.2 | 0.74 | 3 | 104 | Absent | B | Inv. Ex. |
| 9 | 100%Ar | 193 | 18.3 | 0.5 | 210 | 450 | 50 | 70 | 180 | 3.4 | 4.9 | 0.69 | 3 | 108 | Absent | B | Inv. Ex. |
| 10 | 95%Ar+5%CO2 | 189 | 22.8 | 1.0 | 140 | 450 | 50 | 70 | - | 2.8 | 7.0 | 0.40 | 35 | 134 | Absent | F | Comp. Ex. |
| 11 | 100%Ar | 175 | 21.1 | 0.0 | 120 | 250 | 50 | 70 | 92 | 3.7 | 2.8 | 1.32 | 11 | 92 | Absent | F | Comp. Ex. |
| 12 | 100%Ar | 235 | 21.7 | 2.0 | 95 | 450 | 50 | 90 | 108 | 2.4 | 6.9 | 0.35 | 31 | 131 | Absent | F | Comp. Ex. |
| 13 | 98%Ar+2%CO2 | 201 | 23.2 | 1.8 | - | - | - | 50 | - | 1.3 | 9.0 | 0.14 | 19 | 154 | Present | F | Comp. Ex. |
| 14 | 100%Ar | 225 | 21.9 | 1.0 | 140 | 550 | 50 | 200 | 74 | 2.5 | 3.1 | 0.81 | 9 | 95 | Absent | B | Inv. Ex. |

Reference Signs List

1 WELDING WIRE
2 WELDING TORCH
3 BASE MATERIAL
5 ARC
6 WELD BEAD
7 DROPLET
8 MOLTEN POOL
10 BEAD-START AND BEAD-FINISH END PORTIONS
19 OVERLAP CORNER
20 TARGET LINE
21 OFFSET DIRECTION
22 OFFSET VALUE
25 WELD METAL HEIGHT (H)
26 WELD METAL WIDTH (W)
27 FLANK ANGLE ($\theta$)
tup RISE-UP TIME
tp PULSE PEAK CURRENT TIME
tdown FALL-DOWN TIME
tb PULSE BASE CURRENT TIME
tup + tp + tdown + tb ONE PULSE PERIOD
$S_{BEAD}$ BEAD SURFACE AREA
$S_{SLAG}$ SLAG-COVERED SURFACE AREA
$W_{MAX}$ MAXIMUM VALUE OF BEAD WIDTH
$W_{min}$ MINIMUM VALUE OF BEAD WIDTH

**Claims**

1. A lap fillet arc welding method of joining a corner formed by at least two steel sheets, wherein
   the joining is performed using short-circuit transfer, a welding target position is displaced from an overlap corner formed by the two steel sheets and present at an end of the upper sheet of the two steel sheets, by 0.2 mm or more and 1.8 mm or less in a direction perpendicular to a weld seam of the lower sheet, a gas containing 98 vol% or more Ar is used as a shielding gas, and a weld metal height H (mm) and a weld metal width W (mm) of a weld satisfy expression (1) below:

$$0.2 \leq H/W \leq 1.2 \quad \cdots (1).$$

2. The lap fillet arc welding method according to claim 1, wherein pulse welding is used in which a pulse peak current (Ip) and a pulse base current (Ib) are repeated periodically, and the pulse peak current (Ip) and a pulse frequency in the pulse welding are 300 A or more and 600 A or less, and 30 Hz or more and 200 Hz or less, respectively.

3. A method for manufacturing a welded joint using the lap fillet arc welding method described in claim 1 or 2.

# FIG. 1-1

# FIG. 1-2

FIG. 1-3

# FIG. 2

(a)

(b)

EP 4 570 410 A1

## FIG. 3

(a)

(b)

# FIG. 4

# FIG. 5

## INTERNATIONAL SEARCH REPORT

| International application No. |
| --- |
| **PCT/JP2023/033085** |

| A. | CLASSIFICATION OF SUBJECT MATTER |
| --- | --- |

***B23K 9/073***(2006.01)i; ***B23K 9/02***(2006.01)i; ***B23K 9/09***(2006.01)i; ***B23K 9/16***(2006.01)i
FI: B23K9/073 545; B23K9/02 D; B23K9/09; B23K9/16 J

According to International Patent Classification (IPC) or to both national classification and IPC

| B. | FIELDS SEARCHED |
| --- | --- |

Minimum documentation searched (classification system followed by classification symbols)

B23K9/073; B23K9/02; B23K9/09; B23K9/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | WO 2021/085544 A1 (JFE STEEL CORP.) 06 May 2021 (2021-05-06) paragraphs [0014]-[0041], fig. 1-5 | 1-3 |
| Y | JP 61-144270 A (KOBE STEEL, LTD.) 01 July 1986 (1986-07-01) page 2, upper left column, line 13 to lower left column, line 20, fig. 1-7 | 1-3 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **26 October 2023** | **07 November 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/033085**

| Patent document cited in search report | | | Publication date (day/month/year) | Patent family member(s) | | | Publication date (day/month/year) |
|---|---|---|---|---|---|---|---|
| WO | 2021/085544 | A1 | 06 May 2021 | US | 2022/0402078 | A1 | |
| | | | | paragraphs [0024]-[0064], fig. 1-5 | | | |
| | | | | EP | 4052834 | A1 | |
| | | | | CN | 114616068 | A | |
| | | | | KR | 10-2022-0066379 | A | |
| JP | 61-144270 | A | 01 July 1986 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9020994 A
- JP 8033997 A
- JP 5549615 B